(19) Europäisches Patentamt / European Patent Office / Office européen des brevets

(11) **EP 2 717 402 A1**

(12) **DEMANDE DE BREVET EUROPEEN**

(43) Date de publication:
**09.04.2014 Bulletin 2014/15**

(51) Int Cl.:
***H02H 3/40*** (2006.01)

(21) Numéro de dépôt: **13354037.7**

(22) Date de dépôt: **02.10.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.10.2012 FR 1202678**

(71) Demandeurs:
• **Schneider Electric Industries SAS**
**92500 Rueil-Malmaison (FR)**
• **Electricité de France (EDF)**
**75008 Paris (FR)**

(72) Inventeurs:
• **Jecu, Cristian**
**F-38100 Grenoble (FR)**
• **Alibert, Philippe**
**F-38250 Lans-en-Vercors (FR)**
• **Raison, bertrand**
**F-38400 Saint-Martin-d'Hères (FR)**
• **Chillard, Olivier**
**F-92260 Fontenay-aux-Roses (FR)**

(74) Mandataire: **Talbot, Alexandre**
**Cabinet Hecké**
**Europole**
**10, rue d'Arménie - BP 1537**
**38025 Grenoble Cedex 1 (FR)**

(54) **Plan de protection amélioré contre les défauts monophasés pour les réseaux de distribution moyenne tension**

(57) Le réseau de distribution d'énergie électrique comporte un départ (1) moyenne tension ayant une extrémité amont destinée à être connectée à une source d'alimentation (2). Le départ (1) comporte au moins des première ($P_i$) et deuxième ($P_{i+i}$) protections consécutives échelonnées le long du départ (1) et définissant les extrémités d'un premier ouvrage ($O_i$) à surveiller. La première protection ($P_i$) comporte un module de recherche ($M_i$) configuré pour déclencher un organe de coupure ($C_i$) pour interrompre la distribution de l'énergie électrique :

- après un premier retard temporel ($T_{i1}$) lorsque le module de recherche ($M_i$) détecte un défaut monophasé établi (D) dans une zone de surveillance ($L_i$) du premier ouvrage ($O_i$) ; et
- après un deuxième retard temporel ($T_{i2}$) supérieur au premier retard temporel ($T_{i1}$) lorsque le module de recherche ($M_i$) détecte un défaut monophasé établi (D) dans une zone de surveillance additionnelle ($L'_i$) située en aval de la zone ($L_i$).

**Figure 1**

**Description**

**Domaine technique de l'invention**

L'invention est relative à un réseau de distribution d'énergie électrique comportant un départ moyenne tension ayant une extrémité amont et une extrémité aval, l'extrémité amont étant destinée à être connectée à une source d'alimentation.

**État de la technique**

L'acheminement de l'énergie électrique, depuis les centres de production vers les clients, est organisé en deux niveaux principaux. Le premier niveau correspond à un réseau de transport à haute tension (HT), usuellement pour une tension composée supérieure à 50 kV. Le réseau de transport à haute tension est destiné à acheminer l'énergie électrique des centres de production et des centrales électriques, vers des centres de distribution qui desservent les zones de consommation. Le deuxième niveau correspond à un réseau de distribution moyenne tension (MT), usuellement pour une tension composée inférieure à 50 kV. Le réseau de distribution moyenne tension permet de transporter l'énergie électrique à l'échelle locale, des centres de distribution vers le client final.

Les réseaux de distribution d'énergie électrique actuels ne cessent d'évoluer. À titre d'exemple, le développement et les incitations réglementaires en faveur des énergies renouvelables ont favorisé l'augmentation considérable du taux de raccordement des dispositifs de génération d'énergie dispersée

(GED). Ainsi, un plan de protection associé à un réseau électrique actuel moyenne tension doit s'adapter à cette évolution afin d'améliorer la qualité du service d'alimentation et de raccordement. Les distributeurs cherchent, en premier lieu, à garder connecté un maximum de consommateurs, et dans certaines mesures un maximum de producteurs locaux, en cas d'occurrence d'un défaut dans le réseau. De ce fait, les réseaux de distribution d'énergie sont préférentiellement découpés en zones protégées par des protections déployées le long du réseau.

De manière générale, une protection est utilisée pour détecter des défauts d'isolement pouvant se produire dans un réseau électrique. La fonction de protection est réalisée par des modules multifonctions, qui comparent continûment les grandeurs électriques du réseau à des seuils. En fonction du type de protection, les modules multifonctions peuvent mesurer un courant, une tension ou encore une fréquence, et calculer à partir de ces grandeurs mesurées d'autres grandeurs, notamment des puissances et des impédances. Une protection détecte un défaut, lorsqu'une grandeur mesurée ou calculée présente une valeur anormale. Ainsi, le module multifonction donne des ordres d'action comme une ouverture d'un disjoncteur.

L'efficacité d'un plan de protection d'un réseau de distribution d'énergie électrique dépend fortement de la sélectivité des protections déployées en réseau. Par sélectivité, on entend le moyen de régler les protections pour leur permettre d'agir correctement de manière coordonnée et le plus rapidement possible. La sélectivité impose des réglages précis qui permettent aux protections d'isoler la zone du réseau comportant un défaut en laissant sous tension, si c'est possible, les autres parties saines du réseau. Suivant la configuration du réseau de distribution de l'énergie, et suivant les moyens à la disposition du concepteur du réseau, différentes sélectivités peuvent être mises en oeuvre.

À titre d'exemple, des sélectivités différentielle et logique peuvent être utilisées dans un plan de protection d'un réseau de distribution moyenne tension. Cependant, ces sélectivités nécessitent une communication rapide entre les protections pour une utilisation efficace dans un réseau de protections déployées en série. La communication entre protections implique l'utilisation de fils de connexion supplémentaires, et ainsi un coût plus élevé et un risque de panne additionnel. Généralement, afin d'assurer le fonctionnement de plusieurs protections en série, les protections utilisent une sélectivité chronométrique. Les protections déployées dans un départ connecté à un poste de transformation HT/MT, sont réglées avec une temporisation décroissante depuis le poste de transformation HT/MT vers l'extrémité du départ opposée audit poste de transformation HT/MT. Ainsi, en respectant des limites de temporisation et la nécessité d'avoir des protections de secours, le nombre de protections qui peuvent être déployées est limité et généralement ne dépasse pas trois protections.

Une sélectivité de type spatio-temporelle peut également être utilisée dans un réseau électrique comportant plusieurs protections disposées en série. Ce type de sélectivité repose sur la détermination par une protection donnée, d'une zone d'occurrence d'un défaut. Lorsque le réseau n'est pas homogène, la détermination du lieu d'apparition d'un défaut, ou même d'une zone d'occurrence du défaut devient difficilement réalisable, ce qui limite l'utilisation de ce type de sélectivité dans les réseaux moyenne tension. Aujourd'hui, les réseaux de distribution moyenne tension sont de plus en plus complexes. En effet, la plupart de ces réseaux sont des réseaux hétérogènes, pouvant comporter des dispositifs de génération d'énergie dispersée (GED). Une détermination d'une zone d'occurrence d'un défaut dans ce type de réseau devient alors une tâche compliquée.

**Objet de l'invention**

L'objet de l'invention consiste à réaliser un plan de protection, pour un réseau de distribution électrique moyenne tension, comportant plusieurs protections en série, facile à mettre en oeuvre et pouvant s'adapter à différentes configurations des réseaux de distribution, notamment celles comportant des conducteurs hétérogènes.

On tend vers cet objet en prévoyant un réseau de distribution d'énergie électrique comportant un départ moyenne tension ayant une extrémité amont et une extrémité aval, l'extrémité amont étant destinée à être connectée à une source d'alimentation, et au moins des première et deuxième protections consécutives échelonnées le long dudit départ et agencées de sorte que la première protection soit disposée entre l'extrémité amont du départ et la deuxième protection, la première et la deuxième protections définissant les extrémités amont et aval d'un premier ouvrage associé à la première protection. En outre, la première protection comporte un circuit de coupure de la distribution en aval de la première protection de l'énergie électrique, et un module de recherche configuré pour détecter un défaut monophasé établi en aval de la première protection, le module de recherche étant muni d'un circuit de mesure de courant et de tension de phase. La première protection comporte également, un système de calcul d'une grandeur complexe $Z_i$ ayant une partie réelle $Re(Z_i)$ et une partie imaginaire $Im(Z_i)$ à partir de la tension et du courant de phase mesurés, et un circuit de comparaison de la grandeur complexe calculée $Z_i$ avec des premier et second seuils complexes correspondant à des première et seconde droites dans un plan complexe associé au repère $(O, Re(Z_i), Im(Z_i))$. Le premier seuil complexe définit dans le plan complexe un premier domaine configuré pour représenter l'occurrence d'un défaut monophasé établi dans une zone de surveillance comprise dans le premier ouvrage et ayant la première protection comme extrémité amont. Les premier et deuxième seuils définissent également dans le plan complexe un deuxième domaine ne se chevauchant pas avec le premier domaine, et configuré pour représenter l'occurrence d'un défaut monophasé établi dans une zone de surveillance additionnelle distincte de la zone de surveillance et disposée à son aval de manière à ce que l'extrémité aval de la zone de surveillance correspond à l'extrémité amont de la zone de surveillance additionnelle. De plus, le circuit de coupure est configuré pour couper la distribution d'énergie électrique après :

- un premier retard temporel lorsque la grandeur complexe calculée $Z_i$ appartient au premier domaine du plan complexe ;
- un deuxième retard temporel supérieure au premier retard temporel, lorsque la grandeur complexe calculée $Z_i$ appartient au second domaine du plan complexe, et lorsque le défaut monophasé est toujours détecté après le premier retard temporel.

On prévoit également, un procédé de protection du réseau de distribution d'énergie électrique comportant les étapes suivantes lors de la détection d'un défaut monophasé établi par la première protection :

- un calcul de la grandeur complexe $Z_i$ à partir d'une tension et d'un courant de phase mesurés par le circuit de mesure ;
- une comparaison de la grandeur calculée $Z_i$ avec les premier et second seuils complexes correspondant à des droites dans le repère complexe $(O, Re(Z_i), Im(Z_i))$ ;
- une vérification de la présence d'un défaut monophasé établi soit dans la zone de surveillance soit dans la zone de surveillance additionnelle.

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 illustre, schématiquement, un réseau de distribution d'énergie électrique comportant plusieurs protections disposées en série selon un mode de réalisation particulier de l'invention ;
- la figure 2 illustre, schématiquement, la représentation théorique dans un repère complexe de deux domaines du plan complexe, définis par deux seuils complexes et associés à deux zones à surveiller par une protection disposée dans le réseau de la figure 1 ;
- les figures 3 à 5 illustrent, schématiquement, des exemples d'un réseau ou de portions de réseaux de distribution d'énergie électrique comportant trois protections en série selon des modes de réalisation de l'invention ;
- la figure 6 illustre, schématiquement, un réseau d'étude théorique de distribution d'énergie électrique comportant trois protections en série ;
- la figure 7 illustre, schématiquement, la représentation dans un repère complexe des valeurs, obtenues par simulation, d'une grandeur complexe associée à une protection disposée dans le réseau d'étude théorique de la figure 6 ;
- la figure 8 illustre, schématiquement, la représentation dans un repère complexe des valeurs d'une grandeur complexe, associée à une protection disposée dans un réseau d'étude théorique, obtenues par simulation ; et

- la figure 9 représente les étapes d'un procédé de modulation d'un coefficient de calcul pour la détermination de seuils complexes associés à une protection disposée dans le réseau de la figure 1.

**Description de modes préférentiels de réalisation**

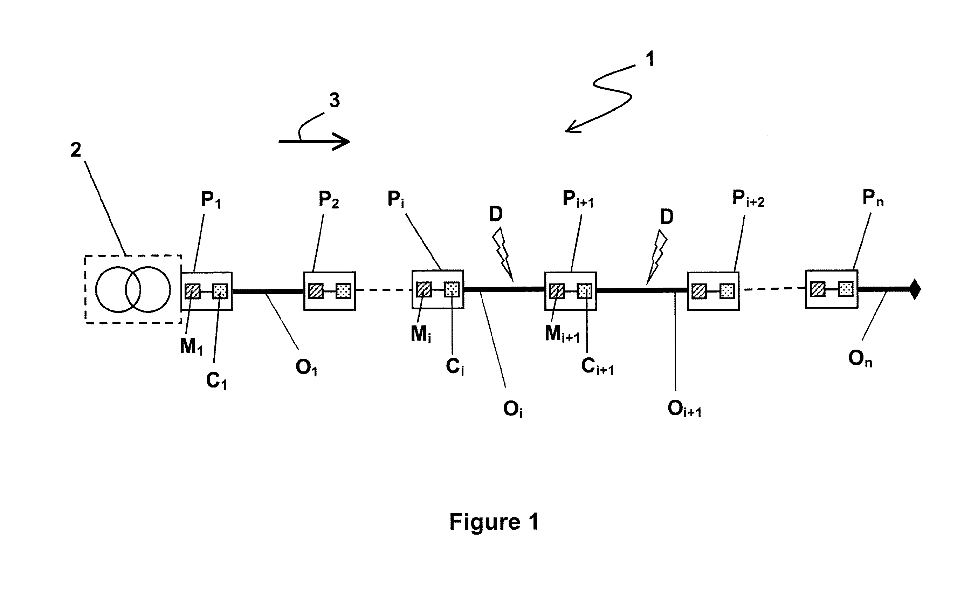

Selon un mode de réalisation de l'invention illustré à la figure 1, un réseau de distribution d'énergie électrique comporte un départ 1 moyenne tension (en anglais : « medium voltage feeder ») ayant une extrémité amont et une extrémité aval. L'extrémité amont est destinée à être connectée à une source d'alimentation 2, permettant ainsi la distribution de l'énergie électrique selon un sens de distribution 3. La source d'alimentation 2 peut être constituée par un poste de transformation haute tension / moyenne tension (HT/MT). Par poste de transformation HT/MT, on entend l'interface entre un réseau de transport haute tension et un réseau de distribution moyenne tension. Un poste de transformation HT/MT comporte généralement, des transformateurs HT/MT, des arrivées, un jeu de barres et des départs.

Le réseau comporte également au moins deux protections déployées dans le départ 1. Dans la suite de la description, et pour simplifier la notation des différentes protections déployées dans le départ 1, on considérera que les protections forment une série de n protections, n étant un entier supérieur ou égal à 2 et que chaque protection $P_j$ de cette série sera associée à un rang j, j étant un entier compris entre 1 et n. Les protections $P_j$ sont échelonnées dans le départ 1 depuis l'extrémité amont vers l'extrémité aval du départ 1 suivant un rang j croissant.

Comme illustré à la figure 1, le réseau comporte au moins des première $P_i$ et deuxième $P_{i+1}$ protections consécutives, échelonnées le long dudit départ 1, et agencées de sorte que la première protection $P_i$ soit disposée entre l'extrémité amont du départ 1, selon le sens de distribution 3, et la deuxième protection $P_{i+1}$. Les première $P_i$ et deuxième $P_{i+1}$ protections définissent les extrémités amont et aval, selon le sens de distribution 3, d'un premier ouvrage $O_i$. Par ouvrage, on entend un tronçon du départ 1 délimité par deux organes de coupure, et pouvant comporter des conducteurs hétérogènes, par exemple des lignes aériennes et des câbles souterrains. L'ouvrage $O_i$ est associé à la première protection $P_i$. Par ailleurs, le réseau comporte un deuxième ouvrage $O_{i+1}$ associé à la deuxième protection $P_{i+1}$ qui définit son extrémité amont.

La première protection $P_i$ comporte un module de recherche $M_i$, usuellement appelé relais de protection, et un circuit de coupure $C_i$ configuré pour interrompre la distribution de l'énergie électrique, en aval de la première protection $P_i$. Le circuit de coupure $C_i$ est commandé par le module de recherche $M_i$ qui est muni d'un circuit de mesure de courant et de tension de phase. Le module de recherche $M_i$ est configuré pour détecter un défaut monophasé établi D apparaissant en aval de la première protection $P_i$, et pour déterminer la directionnalité du courant de ce défaut et la phase en défaut. Le module de recherche $M_i$ a également comme fonction la discrimination d'une zone du départ 1 située en aval de la première protection $P_i$, comportant le défaut monophasé établi D.

Pour une source d'alimentation 2 constituée par un poste de transformation HT/MT ayant une mise à la terre avec le neutre compensé, la détection des défauts par le module de recherche $M_i$ dans le départ 1 est, préférentiellement réalisée en se basant sur le critère utilisé par une protection de type PWH (PWH pour protection wattmétrique homopolaire). En fait, les protections de type PWH exploitent la composante active de la puissance homopolaire. Pour les autres mises à la terre, le module de recherche $M_i$ peut utiliser un critère ampèremétrique avec directionnalité exploitant le courant homopolaire. Cette détection est associée à un principe de détection de la phase en défaut qui permet d'appliquer un algorithme de discrimination uniquement sur la phase en défaut.

La première protection $P_i$ fonctionne selon une sélectivité spatio-temporelle. Autrement dit, lors de la détection d'un défaut monophasé établi D apparaissant dans le départ 1 et en aval de la première protection $P_i$, le module de recherche $M_i$ détermine une zone plus ou moins grande, d'occurrence du défaut D dans le départ 1. Selon la position de la zone d'occurrence du défaut D dans le départ 1, le module de recherche $M_i$ décide soit de continuer, soit de couper la distribution d'énergie électrique en aval de la première protection $P_i$. Pour couper la distribution d'énergie électrique, le module de recherche $M_i$ ordonne au circuit de coupure $C_i$ de se déclencher après un retard temporel préalablement déterminé. La valeur de temporisation du déclenchement du circuit de coupure $C_i$ dépend de la position de ladite zone d'occurrence du défaut D dans le départ 1.

La première protection $P_i$ est configurée pour calculer une grandeur complexe $Z_i$ ayant une partie réelle $Re(Z_i)$ et une partie imaginaire $Im(Z_i)$, pour déterminer la zone du départ 1 comportant un défaut monophasé établi D. Le calcul de la grandeur complexe $Z_i$ est effectué, par un système de calcul compris dans la première protection $P_i$, à partir de la tension et du courant de phase mesurés par le circuit de mesure du module de recherche $M_i$.

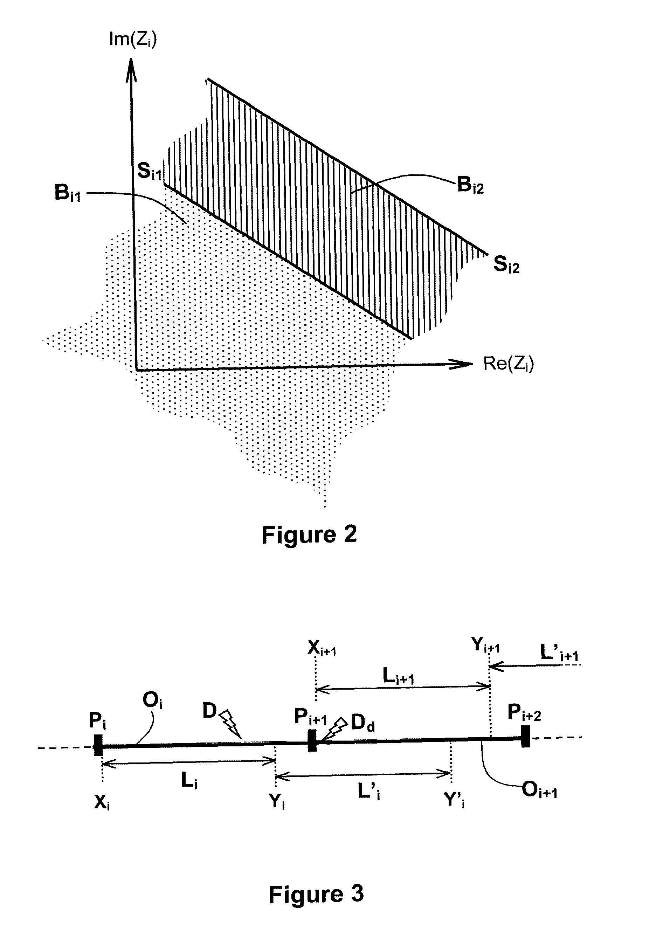

La première protection $P_i$ comporte également un circuit de comparaison de la grandeur complexe calculée $Z_i$ avec des premier $S_{i1}$ et second $S_{i2}$ seuils complexes. Comme illustré aux figures 2 et 3, les premier $S_{i1}$ et second $S_{i2}$ seuils complexes correspondent, par exemple, respectivement à des première et seconde droites dans un plan complexe associé au repère orthonormé $(O, Re(Z_i), Im(Z_i))$. Le premier seuil complexe $S_{i1}$, définit dans le plan complexe, un premier domaine $B_{i1}$ configuré pour représenter l'occurrence d'un défaut monophasé établi D dans une zone de surveillance $L_i$ associée à la première protection $P_i$ et comprise dans le premier ouvrage $O_i$. La première protection $P_i$

constitue l'extrémité amont $X_i$ de la zone de surveillance $L_i$ (et du premier ouvrage $O_i$). Les premier $S_{i1}$ et deuxième $S_{i2}$ seuils complexes définissent dans le plan complexe un deuxième domaine $B_{i2}$ configuré pour représenter l'occurrence d'un défaut monophasé établi D dans une zone de surveillance additionnelle $L'_i$ distincte de la zone de surveillance $L_i$ et disposée en aval.

Avantageusement, pour que la première protection $P_i$ puisse surveiller toutes les parties de l'ouvrage $O_i$, la zone additionnelle $L_i'$ est définie dans les premier $O_i$ et deuxième $O_{i+1}$ ouvrages de manière à ce que l'extrémité aval $Y_i$ de la zone $L_i$, disposée dans le premier ouvrage $O_i$, constitue l'extrémité amont de la zone additionnelle $L_i'$. Les premier et second domaines $B_{i1}$ et $B_{i2}$ sont des domaines du plan complexe dans lesquels les valeurs de la grandeur calculée $Z_i$ sont représentées. Les premier $S_{i1}$ et second $S_{i2}$ seuils complexes sont déterminés de manière à ce que lesdits premier et second domaines soient distincts et ne se chevauchent pas, au moins dans la partie du plan complexe dans laquelle les valeurs de la grandeur calculée $Z_i$ sont représentées.

Les premier $S_{i1}$ et second $S_{i2}$ seuils associés à la première protection $P_i$ sont préalablement déterminés en fonction de la configuration du réseau. La configuration d'un réseau dépend de plusieurs paramètres parmi lesquels on peut trouver :

- la nature (capacitive, résistive, inductive) et la valeur de l'impédance de la mise à la terre ;
- le type de fonctionnement du réseau, autrement dit si le réseau est réalimenté ou non par un autre réseau de secours ;
- l'état des organes de coupure des protections déployées dans le départ (fermé/ouvert) ;
- l'existence de dispositifs de génération d'énergie dispersée (GED) connectés au réseau ;
- les caractéristiques techniques des équipements utilisés dans le réseau.

La valeur de la grandeur complexe $Z_i$ tient compte au moins de la position du lieu d'apparition du défaut monophasé établi D, par rapport au circuit de mesure, et de la valeur de résistance de ce défaut. Grâce au moyen de simulations transitoires électromagnétiques, il est possible de calculer différentes valeurs de la grandeur complexe $Z_i$ en fonction de la variation du lieu d'apparition d'un défaut monophasé établi simulé, et des variations de sa résistance. Par simulation transitoire électromagnétique, on entend une simulation permettant de modéliser le réseau par des équations différentielles, et de suivre l'évolution temporelle de différentes grandeurs électriques liée à l'apparition de défauts monophasés établis dans le réseau. De manière préférentielle, la formule mathématique de la grandeur complexe $Z_i$ est choisie de manière à ce que la variation des parties réelle $Re(Z_i)$ et imaginaire $Im(Z_i)$ en fonction du lieu d'apparition d'un défaut monophasé établi ayant une résistance fixée, est une variation monotone. De manière analogue, la variation des parties réelle $Re(Z_i)$ et imaginaire $Im(Z_i)$ de la grandeur complexe $Z_i$ en fonction de la résistance d'un défaut apparaissant dans un lieu fixé du départ 1, est préférentiellement choisie monotone. Le lieu d'apparition du défaut monophasé établi correspond sensiblement à la distance existante entre le défaut monophasé établi et le circuit de mesure du module de recherche, pondérée par la nature des conducteurs séparant le circuit de mesure et le défaut monophasé établi.

Les valeurs de la grandeur complexe $Z_i$ calculées par simulation, pour des défauts monophasés établis dont les caractéristiques sont définies, peuvent être représentées dans le repère complexe $(0, Re(Z_i), Im(Z_i))$. Par caractéristique d'un défaut monophasé établi, on entend principalement son lieu d'apparition x et sa résistance $R_{def}$.

La représentation des valeurs simulées de la grandeur complexe $Z_i$, pour la première protection $P_i$, permet de délimiter le premier domaine $B_{i1}$ et le deuxième domaine $B_{i2}$ du plan complexe. Le premier domaine $S_{i1}$ comporte la plupart des valeurs simulées de la grandeur $Z_i$ correspondant à un défaut simulé dont le lieu d'apparition appartient à un tronçon du départ 1 associé à la zone de surveillance $L_i$, et le deuxième domaine $B_{i2}$ comporte la plupart des valeurs simulées de la grandeur $Z_i$ correspondant à un défaut simulé dont le lieu d'apparition appartient à un tronçon du départ 1 associé à la zone de surveillance additionnelle $L_i'$. De manière plus générale, les valeurs simulées permettent de définir une équation représentant l'apparition d'un défaut monophasé établi à la limite de la zone de surveillance $L_i$ avec la zone de surveillance additionnelle $L_i'$. Cette équation est représentative du premier seuil $S_{i1}$ dans le plan complexe.

Après la détermination des seuils complexes $S_{i1}$ et $S_{i2}$, ces derniers sont utilisés par le circuit de comparaison de la première protection $P_i$ afin qu'ils puissent être comparés avec les valeurs de la grandeur complexe $Z_i$ calculées à partir de la tension et du courant de phase mesurés. La méthode de discrimination avec des seuils complexes permet avantageusement d'exploiter la partie imaginaire et la partie réelle de la grandeur complexe $Z_i$, pour une meilleure discrimination de la zone comportant le défaut monophasé établi D le long du départ 1. Les seuils $S_{i1}$ et $S_{i2}$ associés à la première protection $P_i$ correspondent avantageusement, à des droites dans le repère complexe $(O, Re(Z_i), Im(Z_i))$ associé aux valeurs complexes de la grandeur calculée $Z_i$. Un seuil sous forme d'une droite définit deux demi-plans dans le plan complexe, et une droite peut être représentée par une équation linéaire, ce qui facilite le calcul. Ainsi, la comparaison d'une valeur de la grandeur complexe $Z_i$ calculée par la première protection $P_i$ à un seuil sous forme de droite est facilement réalisable en utilisant les équations linéaires représentatives des seuils.

De ce fait, lorsqu'un défaut monophasé établi D est détecté en aval de la première protection $P_i$, le circuit de comparaison peut déterminer si le défaut D apparaît dans la zone de surveillance $L_i$ associée à la première protection $P_i$, ou dans la zone de surveillance additionnelle $L_i'$. Sur la base de cette discrimination, le module de recherche $M_i$

commande le circuit de coupure $C_i$ qui est configuré pour couper la distribution d'énergie électrique après un premier retard temporel $T_{i1}$ lorsque la grandeur calculée $Z_i$ appartient au premier domaine $B_{i1}$ du plan complexe, autrement dit le défaut $D$ apparaît dans une portion du départ 1 associée à la zone de surveillance $L_i$. Le circuit de coupure $C_i$ est également configuré pour couper la distribution d'énergie électrique après un deuxième retard temporel $T_{i2}$ supérieure au premier retard temporel $T_{i1}$ lorsque la grandeur calculée $Z_i$ appartient au second domaine $B_{i2}$ du plan complexe et lorsque le défaut monophasé établi $D$ est toujours détecté après le premier retard temporel $T_{i1}$.

Le premier retard temporel $T_{i1}$ est réglé en fonction des contraintes du réseau à protéger. Généralement, le premier retard temporel $T_{i1}$ correspond au temps de réaction d'une protection usuelle. Le temps de réaction d'une protection comporte un temps de mesure du courant et/ou de tension de phase, un temps de traitement et d'analyse des données obtenues à partir des mesures, et un temps de réponse du circuit de coupure $C_i$. Le temps de réaction d'une protection peut comporter également une temporisation constituant une marge de sécurité. Préférentiellement, le premier retard temporel $T_{i1}$ est de l'ordre de 200 ms. À titre d'exemple, lorsqu'un client est connecté directement sur le premier ouvrage $O_i$ à protéger par la première protection $P_i$, le premier retard temporel $T_{i1}$ inclut, avantageusement, une temporisation additionnelle prenant en compte la protection client. Dans ce cas, la première protection $P_i$ ne se déclenchera qu'après avoir laissé un temps suffisant pour la réaction de la protection client, si le défaut apparaît chez le client. Si la protection client ne s'est pas déclenchée après la temporisation additionnelle, la première protection $P_i$ prendra le relais et interrompra la distribution de l'énergie. À titre d'exemple, le premier retard temporel peut être de l'ordre de 500 ms qui correspond au temps de déclenchement de la protection client (typiquement 200 ms) auquel s'ajoute une temporisation de sélectivité (typiquement 300 ms).

Avantageusement, le réseau de distribution d'énergie électrique comporte une troisième protection $P_{i+2}$ disposée entre la deuxième protection $P_{i+1}$ et l'extrémité aval du départ 1. Les deuxième $P_{i+1}$ et troisième $P_{i+2}$ protections sont disposées dans le départ 1 de manière à définir, respectivement les extrémités amont et aval d'un deuxième ouvrage $O_{i+1}$ associé à la deuxième protection $P_{i+1}$. La zone de surveillance additionnelle $L_i'$ est continue et comporte une portion $[X_{i+1}, Y_i']$ du deuxième ouvrage $O_{i+1}$. L'extrémité aval $Y_i$ de la zone de surveillance $L_i$ peut être confondue avec la position $X_{i+1}$ de la deuxième protection $P_{i+1}$ dans le départ 1. Dans ce cas de figure, la zone de surveillance $L_i$ est associée à l'ouvrage $O_i$ en entier. Le fait de disposer plusieurs protections en série dans le départ 1, et de définir au moins deux zones de surveillance associées à chaque protection, permet avantageusement une meilleure discrimination d'une zone limitée du départ 1 comportant le défaut $D$.

Lorsqu'un défaut monophasé établi $D$ apparaît dans le tronçon $[X_i, Y_i]$ du premier ouvrage $O_i$, le module de recherche $M_i$ de la première protection $P_i$ détecte ce défaut dans la zone de surveillance $L_i$ associée à la première protection $P_i$. Ainsi, la première protection $P_i$ interrompt rapidement, après un premier retard temporel $T_{i1}$, la distribution d'énergie électrique en aval de la première protection $P_i$ pour protéger le réseau et les appareils électriques des clients connectés au réseau.

Lorsqu'un défaut monophasé établi $D$ apparaît dans la portion $[X_{i+1}, Y_i']$ du deuxième ouvrage $O_{i+1}$, il est détecté par les première $P_i$ et deuxième $P_{i+1}$ protections. Dès lors, le module de recherche $M_i$ de la première protection $P_i$ discrimine ce défaut $D$ dans la zone de surveillance additionnelle $L_i'$. La première protection $P_i$ peut agir comme une protection de secours de la deuxième protection $P_{i+1}$. Dans ce cas, la première protection n'interrompt la distribution d'énergie électrique que si le défaut $D$ est toujours détecté après le premier retard temporel $T_{i1}$. La distribution d'énergie électrique est alors interrompue par le circuit de coupure $C_i$ de la première protection $P_i$ au deuxième retard temporel $T_{i2}$ supérieur au premier retard temporel $T_{i1}$. Autrement dit, la première protection $P_i$ vient à la rescousse de la deuxième protection $P_{i+1}$ en cas d'échec de fonctionnement de cette dernière. Par ailleurs, lorsqu'un défaut monophasé $D$ apparaît dans la portion $[Y_i, X_{i+1}]$ localisée vers la fin du premier ouvrage $O_i$, le module de recherche $M_i$ de la première protection $P_i$ discrimine ce défaut $D$ dans la zone de surveillance additionnelle $L_i'$. La distribution d'énergie électrique est alors interrompue par le circuit de coupure $C_i$ de la première protection $P_i$ au deuxième retard temporel $T_{i2}$.

Les premier $T_{i1}$ et deuxième $T_{i2}$ retards temporels sont configurés de manière à ce que les première $P_i$ et deuxième $P_{i+1}$ protections fonctionnent selon une sélectivité chronométrique lorsqu'elles détectent un défaut monophasé établi dans la portion $[X_{i+1}, Y_i']$ du deuxième ouvrage $O_{i+1}$ à protéger par la deuxième protection $P_{i+1}$. La différence $\Delta t$ entre les premier $T_{i1}$ et deuxième $T_{i2}$ retards temporels ($\Delta t = T_{i2} - T_{i1}$) constitue une temporisation de réaction entre la première $P_i$ et la deuxième protection $P_{i+1}$, et elle dépend des performances des équipements utilisés.

Préférentiellement, chaque protection déployée dans le départ 1 fonctionne de manière analogue à la première protection $P_i$, de sorte à former un plan de protection utilisant une sélectivité spatio-temporelle. Ainsi pour chaque protection une zone de surveillance et une zone de surveillance additionnelle sont définies pour surveiller l'ouvrage associé à ladite protection. Comme illustré à la figure 3 et à titre d'exemple, une zone de surveillance $L_{i+1}$ et une zone de surveillance additionnelle $L_{i+1}'$ sont associées à la deuxième protection $P_{i+1}$ et au deuxième ouvrage $O_{i+1}$. Avantageusement, les protections sont identiques et elles ont les mêmes retards temporels ($T_{i1} = T_1$ et $T_{i2} = T_2$). Les protections déployées dans le départ 1 peuvent également avoir des retards temporels différents. Dans ces conditions, les retards temporels associés à chaque protection déployée dans le départ 1, sont configurés de manière à assurer une sélectivité chronométrique entre chaque couple de protections consécutives du départ 1. Une telle configuration des protections déployées permet de réaliser un plan de protection du départ 1 réactif, sûr tout en s'affranchissant de communication rapide entre les protections.

La zone de surveillance $L_i$ représente typiquement entre 70 % et 90 % « en impédance » du premier ouvrage $O_i$. Autrement dit, l'impédance correspondante à la portion $[X_i, Y_i]$ représente entre 70 % et 90 % de la valeur de l'impédance totale du premier ouvrage $O_i$. De manière analogue, la zone additionnelle $L_i'$ surveille entre 40 % et 80 % « en impédance » du deuxième ouvrage $O_{i+1}$ (correspondante à la portion $[X_{i+1}, Y_i']$).

Cette disposition des zones de surveillance $L_i$ et $L_i'$ associées à la première protection $P_i$, permet avantageusement de réduire la probabilité d'un double déclenchement des première $P_i$ et deuxième $P_{i+1}$ protections. Par double déclenchement, on entend un déclenchement instantané de deux protections du départ 1 lors de la détection d'un même défaut monophasé établi D. Un double déclenchement peut être causé par des erreurs de calcul ou de discrimination.

Avantageusement, la zone de surveillance additionnelle $L_i'$ associée à la première protection $P_i$ est distincte de la zone de surveillance $L_{i+1}'$ associée à la deuxième protection $P_{i+1}$. En effet, un défaut monophasé établi apparaissant dans le deuxième ouvrage $O_{i+1}$ à l'intersection entre ces deux zones de surveillance ($L_i'$, $L_{i+1}'$) peut également causer un double déclenchement des première $P_i$ et deuxième $P_{i+1}$ protections au deuxième retard temporel $T_2$.

Les défauts mal discriminés qui causent les doubles déclenchements apparaissent généralement au début d'un ouvrage $O_j$ associé à une protection $P_j$ de rang j. À titre d'exemple, lorsqu'un défaut monophasé établi $D_d$ apparaît dans le deuxième ouvrage $O_{i+1}$ au voisinage de la deuxième protection $P_{i+1}$, autrement dit au voisinage de la position $X_{i+1}$, il peut provoquer un double déclenchement des première $P_i$ et deuxième $P_{i+1}$ protections après le premier retard temporel $T_1$. En effet, dans le cas où la zone de surveillance $L_i$ est associée à tout le premier ouvrage $O_i$, autrement dit le segment $[X_i, X_{i+1}]$ du départ 1, le module de recherche $M_i$ de la première protection $P_i$ peut discriminer, par erreur, le défaut $D_d$ dans la zone de surveillance $L_i$ associée à la première protection $P_i$. Ainsi, la première protection $P_i$ déclenchera son circuit de coupure $C_i$ après le premier retard temporel $T_1$. Le défaut $D_d$ est également détecté par la deuxième protection $P_{i+1}$ et sera discriminé dans la zone de surveillance $L_{i+1}$ associée à la deuxième protection $P_{i+1}$. Dès lors, la deuxième protection $P_{i+1}$ déclenchera son circuit de coupure $C_{i+1}$ après le premier retard temporel $T_1$ causant ainsi un double déclenchement.

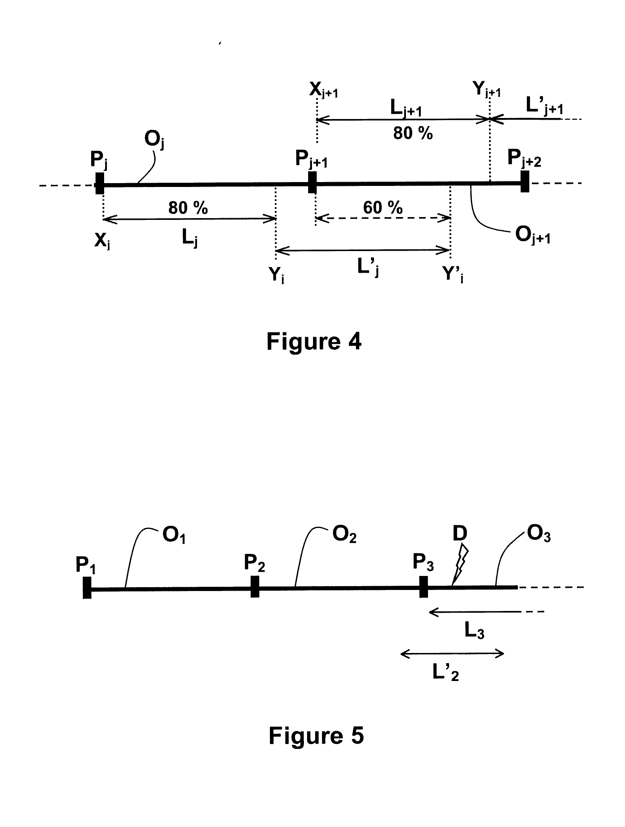

Avantageusement, les zones de surveillance $L_j$ et $L_j'$ associées aux protections $P_j$ de rangs j, j étant un entier compris entre 1 et n-1, sont définies de manière à éviter les doubles déclenchements ou au moins diminuer leur nombre dans le plan de protection. La définition des zones de surveillance $L_j$ et $L_j'$ est réalisée par ajustement des seuils $S_{j1}$ et $S_{j2}$. Comme illustré à la figure 4, pour chaque protection $P_j$ on définit préférentiellement, une zone de surveillance $L_j$ représentant 80 % « en impédance » de l'ouvrage $O_j$ associé à ladite protection $P_j$ de rang j. Une zone de surveillance additionnelle $L_j'$ est également définie de manière à surveiller les 20 % restante de l'ouvrage $O_j$ associé à la protection $P_j$ de rangs j et 60 % de l'ouvrage $O_{j+1}$ associé à la protection $P_{j+1}$ de rang j+1.

Afin d'augmenter le niveau de sécurité de déclenchement des protections dans un départ 1 comportant au moins trois protections, la protection $P_1$ de rang 1 assure avantageusement, un deuxième niveau de sécurité pour toutes les protections disposées à son aval. Autrement dit, pour un départ 1 comportant au moins trois protections, le module de recherche $M_1$ de la protection $P_1$ de rang 1, déclenche le circuit de coupure $C_1$ associé à cette protection $P_1$ après un retard temporel $T_{13}$ supérieur aux retards temporels associés aux différentes protections du départ 1. Ce déclenchement temporisé de $T_{13}$ est réalisé lorsque ledit module de recherche $M_1$ de la protection $P_1$ de rang 1 détecte encore le défaut monophasé D dans le départ 1 même après l'écoulement du retard temporel maximum des protections déployées en aval de la protection $P_1$ de rang 1.

Comme illustré à la figure 5, lors de l'apparition d'un défaut monophasé établi D dans l'ouvrage $O_3$ associée à la protection de rang 3 $P_3$, toutes les protections situées en amont de cet ouvrage détectent simultanément ce défaut. Par modules de recherche et circuits de coupure de rang 1 ($C_1$, $M_1$), 2 ($C_2$, $M_2$) et 3 ($C_3$, $M_3$), on entendra les modules de recherche et les circuits de coupure associés respectivement à la protection $P_1$ de rang 1, à la protection $P_2$ de rang 2 et à la protection $P_3$ de rang 3.

À titre d'exemple, on considère que le défaut D apparaît dans une portion de l'ouvrage $O_3$ couverte par la zone de surveillance additionnelle $L_2'$ associée à la protection de rang 2 $P_2$ et la zone $L_3$ associée à la protection de rang 3 $P_3$. Le module de recherche de rang 3 $M_3$, en discriminant le défaut monophasé établi dans la zone de surveillance $L_3$, ordonnera au circuit de coupure de rang 3 $C_3$ de se déclencher après le premier retard temporel $T_1$. Le module de recherche de rang 2 $M_2$, en discriminant le défaut monophasé établi dans la zone de surveillance additionnelle $L_2'$ ordonnera au circuit de coupure de rang 2 $C_2$ de se déclencher après un deuxième retard temporel $T_2$ ($T_2 > T_1$) si le défaut monophasé établi est toujours détecté par le module de recherche de rang 2 $M_2$ après l'écoulement du premier retard temporel $T_1$. Dans cet exemple, on considérera que les protections ont les mêmes premier $T_1$ et deuxième $T_2$ retards temporels.

Le défaut monophasé établi D apparaissant dans l'ouvrage $O_3$, le module de recherche de rang 1 $M_1$ ne peut le discriminer ni dans la zone de surveillance $L_1$ associée à la protection de rang 1 $P_1$, ni dans la zone de surveillance additionnelle $L_i'$. Par ailleurs, en détectant le défaut monophasé le premier module $M_1$ ordonnera au circuit de coupure de rang 1 $C_1$ de se déclencher après un troisième retard temporel $T_3$ ($T_3 > T_2$) si le défaut monophasé est toujours détecté par le module de recherche $M_1$ de rang 1 après l'écoulement du deuxième retard temporel $T_2$.

Les protections de rangs 1, 2 et 3 ($P_1$, $P_2$, $P_3$) opèrent ainsi suivant une sélectivité chronométrique de manière à ce qu'idéalement le circuit de coupure de rang 3 $C_3$ se déclenche après le premier retard temporel $T_1$. En cas de problème de déclenchement ou de discrimination de la protection de rang 3 $P_3$, la protection de rang 2 $P_2$ agit comme une protection de secours en déclenchant le circuit de coupure $C_2$ après le deuxième retard temporel $T_2$. La protection de rang 1 $P_1$ agit comme une protection de secours ultime, pour toutes les protections du départ 1, en déclenchant son circuit de coupure $C_1$ après un retard temporel $T_3$ si les protections de rangs 2 et 3 $P_2$, et $P_3$ ont rencontré des problèmes de détection ou de discrimination.

De ce fait, la configuration des différentes protections déployées dans le départ 1 permet de diminuer la probabilité d'échec de déclenchement et les doubles déclenchements des différentes protections, surtout lorsqu'un défaut monophasé établi apparaît dans un ouvrage associé à une protection située en aval de la protection de rang 2 $P_2$.

L'efficacité de fonctionnement de la première protection $P_i$, et de ce fait du plan de protection du réseau, dépendent fortement de la précision de détermination de la région du départ 1 comportant un défaut monophasé établi D. Ainsi, la configuration des protections en utilisant une grandeur complexe calculée et comparée à des seuils complexes, permet avantageusement la formation d'un plan de protection fonctionnant selon une sélectivité spatio-temporelle, précis, réactif et sûr. De plus, le fonctionnement du plan de protection selon une sélectivité spatio-temporelle est réalisé en s'affranchissant de communications rapides entre les protections. Cette configuration permet de réaliser également un plan de protection plus efficace et réactif pour des réseaux hétérogènes, et dans certaines mesures même pour des réseaux hétérogènes comportant des dispositifs GED.

Par ailleurs, les défauts monophasés représentent 70 % à 80 % des défauts permanents qui apparaissent dans les réseaux de distribution moyenne tension. De ce fait, le plan de protection décrit ci-dessus facilite l'isolation rapide de la zone comportant ce type de défaut, et permet de limiter le nombre de clients gênés lors de l'élimination du défaut monophasé.

La formule de la grandeur calculée $Z_i$ est préférentiellement choisie de manière à être plus sensible à la variation du lieu du défaut monophasé établi qu'à sa résistance. Avantageusement, la grandeur calculée $Z_i$ par le module de traitement et de commande $M_i$ de la première protection $P_i$ déployée dans le départ 1 est donnée par la relation :

$$Z_i = \frac{V_{i\Phi}}{I_{i\Phi} + k_i \cdot I_{iR}} \quad \text{avec} \quad I_{iR} = I_{iA} + I_{iB} + I_{iC} \qquad (1)$$

Avec :

- $\Phi$ désigne la phase en défaut A, B ou C du système triphasé ;
- i désigne un indice relatif à la première protection $P_i$ et il correspond au rang i de la protection déployée dans le départ 1 selon la notation définie plus haut ;
- $V_{i\Phi}$ et $I_{i\Phi}$ représentent la tension et le courant de la phase $\Phi$ en défaut, mesurés par le circuit de mesure de la première protection $P_i$ en présence du défaut monophasé établi D ;
- $I_{iR}$ représente le courant résiduel qui est égal à la somme des trois courants de phase (A, B, et C) mesuré par le circuit de mesure de la première protection $P_i$ et ;
- $k_i$ représente un coefficient de calcul associé à la première protection $P_i$.

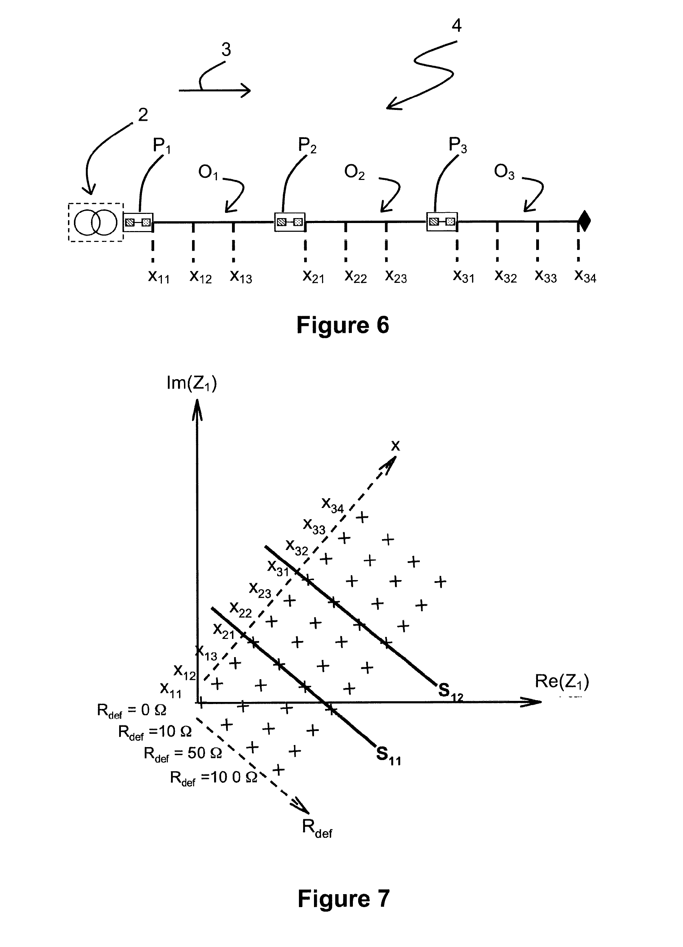

La figure 6 illustre un exemple d'un réseau d'étude théorique 4 pour lequel les valeurs de la grandeur complexe $Z_1$ associées à la première protection $P_1$ ont été calculées par simulation. Le réseau d'étude théorique 4 correspond à un cas simple dont la cohérence est facile à vérifier. Le réseau 4 comporte trois protections $P_1$, $P_2$ et $P_3$. La zone de surveillance $L_1$ représente tout l'ouvrage $O_1$ associé à la protection de rang 1 $P_1$, et la zone de surveillance additionnelle $L'_1$ représente tout l'ouvrage $O_2$ associé à la protection de rang 2. Les zones $L_1$ et $L'_1$ comportent chacune trois lieux ($x = x_{11}$, $x_{12}$, $x_{13}$ et $x = x_{21}$, $x_{22}$, $x_{23}$) choisis pour simuler une apparition d'un défaut monophasé établi. L'ouvrage $O_3$ a une dernière zone de surveillance $L_3$ associée à la dernière protection $P_3$ de rang 3, et comporte quatre lieux ($x = x_{31}$, $x_{32}$, $x_{33}$, $x_{34}$) choisis pour simuler une apparition d'un défaut monophasé établi. Entre deux lieux x consécutifs, l'impédance directe de ligne $Z_x^1$ est constante i.e les lieux de simulation de défauts sont équi-répartis en impédance. Ainsi, les protections $P_1$, $P_2$ et $P_3$ sont également équi-répartis en impédance. Les simulations transitoires électromagnétiques de défauts en réseau ont été réalisées avec le logiciel EMTP-ATP distribué par NTNU/SINTEF. Les résultats des tensions et des courants de phase obtenus par le logiciel EMTP-ATP ont été traités, par la suite, avec le logiciel commercial MATLAB®.

Comme illustré à la figure 7, les coordonnées des valeurs de la grandeur complexe $Z_1$ calculées par simulation pour la première protection $P_1$, ont été schématisées et représentées dans le repère complexe (0, Re($Z_i$), Im($Z_1$)). La

figure 7 montre avantageusement l'utilité des droites de seuil pour améliorer la discrimination des régions d'occurrence des défauts dans le réseau. De plus, la discrimination est obtenue en tenant compte de la variation des parties réelle et imaginaire de la grandeur calculée $Z_1$ en fonction du lieu x et de la résistance $R_{def}$ d'un défaut monophasé établi D.

Pour le cas de la figure 7, les seuils $S_{11}$ et $S_{12}$ sont des droites parallèles formées par les valeurs de la grandeur $Z_1$ associées respectivement aux lieux de défauts $x_{21}$ et $x_{31}$. En effet, les seuils $S_{11}$ et $S_{12}$ associés à la première protection $P_1$ permettent de définir un premier domaine $B_{11}$ et un second domaine $B_{12}$. Le premier domaine, associé à des défauts détectés par la protection $P_1$ et apparaissant dans la zone de surveillance $L_i$, est défini par le demi-plan délimité par la droite de seuil $S_{11}$ et qui comporte l'origine O dudit repère. Dans l'exemple du réseau d'étude théorique 4, on considérera que la zone de surveillance additionnelle $L'_1$ associée à la protection $P_1$ est constituée par la zone du départ 1 disposée entre les protections $P_2$ et $P_3$. Le second domaine $B_{12}$, associé à des défauts monophasés détectés par la protection $P_1$ et apparaissant dans la zone de surveillance additionnelle $L'_1$, est défini par la partie du plan complexe délimitée par les droites de seuil $S_{11}$ et $S_{12}$. Dans le cas du réseau d'étude théorique 4, la première protection $P_1$ peut être configurée en utilisant les équations linéaires correspondantes aux droites de seuils $S_{11}$ et $S_{12}$.

La figure 7 schématise un cas théorique simple et idéal où les droites de seuils $S_{11}$ et $S_{12}$ permettent une parfaite discrimination de la zone comportant un défaut détecté par la première protection $P_1$. Cependant, dans la pratique les protections ne sont pas échelonnées dans un départ 1 de manière à être équi-réparties en impédance. Autrement dit, les zones de surveillance, délimitées par les protections déployées dans le départ 1, sont généralement hétérogènes. De ce fait, la représentation des valeurs de la grandeur calculée dans un repère complexe peut être différente de celle illustrée à la figure 7.

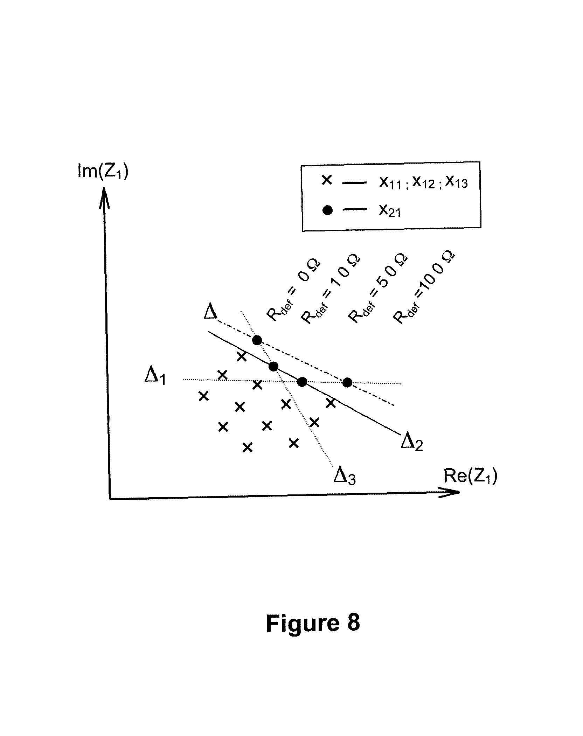

La figure 8 illustre un exemple théorique d'une distribution de valeurs, obtenues par simulation, de la grandeur calculée $Z_1$ dans le repère complexe. Les lieux des défauts sont échelonnés de la même manière que dans l'exemple présenté à la figure 6. Les valeurs associées au premier lieu de défaut $x_{21}$ de la zone associée à la deuxième protection $P_2$ ne sont pas linéaires. Dans l'exemple de la figure 8 où 4 valeurs de la résistance d'un défaut monophasé établi ($R_{def}$ = 0 Ω, 10 Ω, 50 Ω et 100 Ω) sont simulées, six droites éligibles (combinaison de deux points parmi 4 : $C_4^2 = 6$) peuvent être formées par les points correspondants aux valeurs de la grandeur complexe $Z_1$ simulées pour le lieu de défaut $x_{21}$. Si la simulation a été réalisée pour m valeurs de résistances de défaut, on aura $C_m^2$ droites éligibles. Le choix de la droite de seuil parmi toutes les droites éligibles est avantageusement basé sur deux critères principaux.

Une droite de seuil d'une protection $P_j$ donnée ne doit pas discriminer un défaut dans la zone de surveillance $L_j$ alors que le défaut apparaît dans une portion du départ associée à la zone de surveillance additionnelle $L'_j$. Cette condition constitue un premier critère pour le choix de la droite de seuil. À titre d'exemple, la droite $\Delta$ représentée dans la figure 8 ne satisfait pas à ce premier critère. En effet, la droite $\Delta$ définit un premier domaine $B_{11}$ du plan complexe (associé à la zone de surveillance $L_1$) comportant deux points ((x, $R_{def}$)= ($x_{21}$, 10 Q) ; ($x_{21}$, 50 Ω)) qui correspondent à deux défauts monophasés apparaissant dans une portion du départ associée à la zone de surveillance additionnelle $L'_1$. Comme illustré à la figure 8, parmi les six droites éligibles uniquement trois droites ($\Delta_1$, $\Delta_2$, $\Delta_3$) remplissent ce premier critère.

Une droite de seuil conduit préférentiellement, à une probabilité de discrimination ($\alpha_{Si-Pi} = n_d/n_T$) la plus élevée. Cette condition constitue un deuxième critère pour le choix de la droite de seuil. Par probabilité de discrimination, on entend le rapport entre le nombre $n_d$ de valeurs de la grandeur complexe $Z_i$ obtenues par simulation, discriminées avec succès par la droite de seuil déterminée (ou les droites de seuils) $S_i$ de la protection $P_i$, et le nombre total $n_T$ des valeurs correspondant aux différents défauts simulés à des lieux appartenant à une portion du départ associée à la zone de surveillance $L_i$ (ou $L'_i$) de la première protection $P_i$. Pour le cas de la figure 8, le nombre de simulations réalisées pour des défauts dont le lieu appartient à une portion du départ associée à la zone de surveillance $L_1$ est égale à 12 ($n_T(L_1)$ = 12). Les probabilités de discrimination réussie associées aux droites de seuils $\Delta_1$, $\Delta_2$ et $\Delta_3$ sont respectivement égales à $\alpha_{\Delta1,P1}$ = 10/12, $\alpha_{\Delta2,P1}$ = 12/12 et $\alpha_{\Delta3,P1}$ = 10/12. Dans l'exemple théorique de la figure 8, la droite $\Delta_2$ satisfait aux premier et deuxième critères. Ainsi, la droite $\Delta_2$ peut être choisie comme première droite de seuil $S_{11}$ associée à la première protection $P_1$ parmi les six autres droites éligibles. L'équation linéaire associée à la droite de seuil $\Delta_2$ est alors introduite dans le module de recherche $M_1$. Lors de l'apparition d'un défaut monophasé établi dans le départ 1, le module $M_1$ compare la valeur de la grandeur calculée $Z_1$ (à partir de la tension et du courant de phase mesurés) avec ladite équation linéaire de la droite $\Delta_2$, i.e. le premier seuil $S_{11}$, afin de vérifier si le défaut monophasé établi D apparaît dans une portion du départ associée à la zone de surveillance $L_1$.

En disposant de données relatives à la probabilité d'apparition des défauts monophasés établis en fonction de leurs résistances (des données qui peuvent être fournies par les distributeurs de l'énergie électrique), la probabilité de discrimination $\alpha_{Si-Pi}$ est préférentiellement pondérée par la probabilité d'apparition des défauts selon leurs résistances. Cette pondération de la probabilité permet avantageusement de favoriser la discrimination des défauts ayant une probabilité d'apparition la plus élevée, en tenant compte de leurs résistances.

Selon un mode particulier de mise en oeuvre d'un procédé de protection du réseau décrit ci-dessus, une première étape de calcul de la grandeur complexe $Z_i$ est effectuée lors de la détection d'un défaut monophasé établi par la première protection $P_i$. Le calcul de la grandeur complexe $Z_i$ est réalisé à partir d'une tension et d'un courant de phase mesurés par le circuit de mesure du module de recherche $M_i$ de la première protection $P_i$. Une comparaison de la grandeur calculée $Z_i$ avec les premier et second seuils complexes $(S_{i1}, S_{i2})$ est ensuite mise en oeuvre. Les premier et second seuils $(S_{i1}, S_{i2})$ sont par exemple des équations linéaires qui correspondent avantageusement à des droites dans le repère complexe $(O, Re(Z_i), Im(Z_i))$ où les valeurs de la grandeur complexe $Z_i$ peuvent être représentées. Préférentiellement, la grandeur calculée $Z_i$ est comparée, dans un premier temps, avec la droite associée au premier seuil $S_{i1}$. Cette première comparaison permet de vérifier si le défaut monophasé établi D est situé dans la zone de surveillance $L_i$ associée à la première protection $P_i$. Si la première comparaison ne permet pas de discriminer le défaut monophasé dans cette zone, alors le module de recherche $M_i$ effectue une deuxième comparaison de la grandeur calculée $Z_i$, avec la droite associée au deuxième seuil $S_{i2}$ pour vérifier si le défaut monophasé établi D est situé dans une portion du départ associée à la zone de surveillance additionnelle $L'_i$.

L'efficacité du procédé de protection décrit ci-dessus, dépend de la configuration de la première protection déployée dans le réseau à protéger. Par configuration d'une protection, on entend le préréglage de la protection, avant sa mise, en marche destiné à surveiller une région du réseau. Le préréglage comporte essentiellement une étape où l'on fournit à une protection, les seuils complexes et les retards temporels.

La formule de l'équation (1) montre que la grandeur calculée $Z_i$ par le module de recherche $M_i$ de la première protection $P_i$, dépend du coefficient de calcul $k_i$. De ce fait, la détermination des premier et second seuils $(S_{i1}, S_{i2})$ associés à la première protection $P_i$ dépend également du choix du coefficient $k_i$. Avantageusement, le coefficient $k_i$ est modulé de manière à améliorer l'efficacité de discrimination par la première protection $P_i$, des zones surveillées du départ 1 comportant un défaut monophasé établi.

Selon un mode particulier de mise en oeuvre d'un procédé de réglage de la première protection $P_i$ calculant la grandeur complexe $Z_i$ selon l'équation (1), le coefficient $k_i$ est modulé en se basant sur des résultats de simulations transitoires électromagnétiques. En effet, l'évolution temporelle du courant et de la tension de phase est étudiée lors d'une apparition d'un défaut monophasé établi D dans le départ 1. Les simulations sont réalisées de manière à calculer la tension et le courant de phase dans la première protection $P_i$ en variant le lieu d'apparition x, dans le départ 1, du défaut monophasé établi D et sa résistance $R_{def}$. De ce fait, chaque simulation effectuée permet de calculer des valeurs de la tension et du courant de phase dans la première protection $P_i$, pour un défaut monophasé établi ayant une résistance $R_{def}$ et apparaissant dans un lieu x du départ 1. Ensuite, la grandeur complexe $Z_i$ est calculée pour chaque simulation réalisée, et pour un coefficient de calcul $k_i$ donné. Les différentes grandeurs complexes calculées $Z_i(x, R_{def})$ représentatives des simulations et d'un coefficient de calcul $k_i$ donné, sont alors représentées dans le repère complexe $(O, Re(Z_i), Im(Z_i))$.

Le coefficient de calcul $k_i$ est ensuite modulé de manière à faire varier les différentes grandeurs complexes calculées représentatives des simulations dans le repère complexe $(O, Re(Z_i), Im(Z_i))$. La modulation consiste à étudier plusieurs valeurs du coefficient de calcul $k_i$. Pour chaque coefficient de calcul $k_i$ étudié, des première et seconde droites correspondant aux premier et second seuils $(S_{i1}, S_{i2})$ de la première protection $P_i$, sont définies. La modulation du coefficient de calcul $k_i$ permet de définir des première et seconde droites de seuil de sorte à délimiter le maximum de valeurs de la grandeur calculée $Z_i$ correspondant auxdits premier et second domaines.

Selon un autre mode particulier de mise en oeuvre du réglage de la première protection $P_i$, la modulation du coefficient de calcul $k_i$ est réalisée avantageusement, par itérations successives en utilisant les résultats des simulations transitoires électromagnétiques de défauts monophasés établis dans le départ 1.

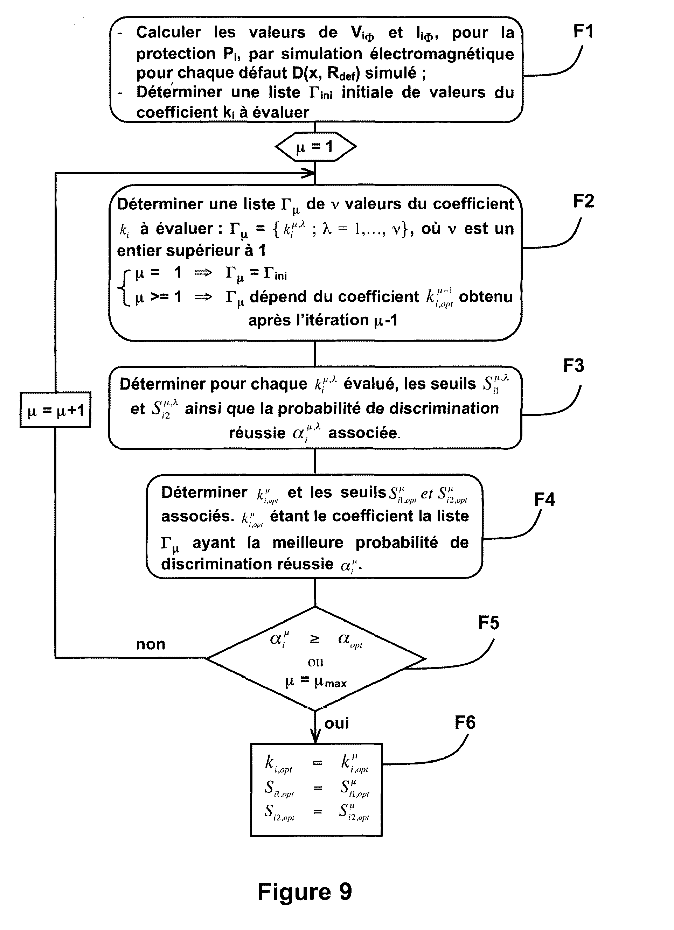

La figure 9 illustre des étapes F1 à F6 d'un procédé de modulation du coefficient de calcul $k_i$. Lors d'une première étape F1, les valeurs de la tension et du courant de la phase en défaut $V_{i\Phi}$ et $I_{i\Phi}$ sont calculées par simulations transitoires électromagnétiques pour la première protection $P_i$ et pour des défauts monophasés établis dans le départ 1. Les simulations sont réalisées pour plusieurs défauts $D(x, R_{def})$ en variant, au moins, le lieu d'apparition x dans le départ 1 et la résistance $R_{def}$ du défaut D. Préférentiellement, la variation du lieu d'apparition est imposée de manière à balayer les premier $O_i$ et deuxième $O_{i+1}$ ouvrages du départ 1. Lors de la première étape F1, on détermine une liste initiale $\Gamma_{ini}$ de $\nu$ valeurs du coefficient $k_i$ à évaluer lors de la première itération. Le nombre $\nu$ de valeurs de coefficient $k_i$ à évaluer, autrement dit la taille de la liste $\Gamma_{ini}$, dépend principalement de la puissance du calculateur qui réalise ladite évaluation.

La modulation du coefficient de calcul $k_i$ est réalisée de manière à ce que pour chaque itération $\mu$, $\mu$ étant un entier compris entre 1 et $\mu_{max}$ un nombre maximum d'itération préalablement fixé, des calculs d'évaluation sont réalisés.

Ces calculs d'évaluation sont réalisés pour chaque coefficient de calcul $k_i^{\mu, \lambda}$ à évaluer appartenant à une liste

$$\Gamma_\mu = \left\{ k_i^{\mu,\lambda}, \ \lambda = 1, \ 2, \ ...\nu \right\},$$ le nombre $\nu$ étant un entier supérieur ou égal à 2 qui peut varier selon l'itération $\mu$. L'étape F2 du diagramme de la figure 9 consiste à déterminer la liste $\Gamma_\mu$ des valeurs du coefficient $k_i$ à évaluer lors de l'itération $\mu$. Autrement dit, pour chaque itération $\mu$, le coefficient $k_i$ prend successivement les valeurs des coefficients $k_i^{\mu,\lambda}$ de la liste $\Gamma_\mu$. À la première itération ($\mu=1$), la liste $\Gamma_\mu$ est la liste $\Gamma_{ini}$ préalablement fixée. À partir de la deuxième itération ($\mu>=2$), la liste $\Gamma_\mu$ des valeurs du coefficient complexe $k_i$ à évaluer, dépend d'un coefficient $k_{i,opt}^{\mu-1}$ obtenu à la fin de l'itération $\mu-1$ (après l'étape F4).

L'étape F3 du procédé de modulation consiste à déterminer pour chaque coefficient de calcul $k_i^{\mu,\lambda}$ évalué, des premier $S_{i1}^{\mu,\lambda}$ et second $S_{i2}^{\mu,\lambda}$ seuils associés respectivement à la zone de surveillance $L_i$, et à la zone de surveillance additionnelle $L'_i$. Ces calculs d'évaluation exploitent les résultats des simulations transitoires électromagnétiques de défauts monophasés établis préalablement effectuées. Ainsi, pour chaque coefficient de calcul $k_i^{\mu,\lambda}$ évalué, une probabilité $\alpha_i^{\mu,\lambda}$ de discrimination réussie associée aux premier $S_{i1}^{\mu,\lambda}$ et second $S_{i2}^{\mu,\lambda}$ seuils, est calculée. La probabilité $\alpha_i^{\mu,\lambda}$ de discrimination réussie dépend des probabilités $\alpha_{i1}^{\mu,\lambda}$ et $\alpha_{i2}^{\mu,\lambda}$ qui correspondent respectivement à la probabilité de discrimination réussie associée au premier seuil $S_{i1}^{\mu,\lambda}$ et au deuxième seuil $S_{i2}^{\mu,\lambda}$. Les probabilités $\alpha_{i1}^{\mu,\lambda}$, $\alpha_{i2}^{\mu,\lambda}$ et les premier $S_{i1}^{\mu,\lambda}$ et second $S_{i2}^{\mu,\lambda}$ sont déterminés d'une manière analogue à celle décrite pour les cas théoriques des figures 6 à 8.

Avantageusement, pour la première itération ($\mu=1$), la liste $\Gamma_{ini}$ des valeurs $k_i^{1,\lambda}$ à évaluer couvre un large domaine de variation du coefficient de calcul $k_i$. Le coefficient $k_i$ étant un coefficient complexe, ainsi la partie réelle des coefficients à évaluer à la première itération peut varier dans un intervalle $A_r = [-a_r/2, a_r/2]$, et la partie imaginaire peut varier dans un intervalle $A_i = [-a_i/2, a_i/2]$, $a_r$ et $a_i$ étant des réels définissant les intervalles $A_r$ et $A_i$. De préférence, les deux intervalles $A_r$ et $A_i$ sont identiques ($a_r = a_i$) et sont parcourus par un pas $p_1$ Ainsi, au total ($E((a_r/p_1)+1) * E((a_i/p_1)+1)$) coefficients $k_i$ seront évalués, où $E(\beta)$ désigne la partie entière d'un nombre réel $\beta$. Autrement dit, la liste $\Gamma_{ini}$ comporte $\nu$ valeurs, $\nu$ étant égal à $E((a_r/p_1)+1) * E((a_i/p_1)+1)$. Le nombre $\nu$ des valeurs de coefficient de calcul à évaluer dépend principalement de la puissance du calculateur qui réalise le calcul des valeurs de la grandeur $Z_i$ obtenus par simulation et la détermination des seuils et le calcul des différentes probabilités.

De plus, après chaque itération $\mu$, un coefficient $k_{i,opt}^{\mu}$ est choisi parmi la liste $\Gamma_\mu$. Le coefficient choisi $k_{i,opt}^{\mu}$ correspond au coefficient de calcul $k_i^{\mu,\lambda}$ de la liste $\Gamma_\mu$ qui possède la probabilité de discrimination $\alpha_i^{\mu} \ (\alpha_i^{\mu} = \max(\alpha_i^{\mu,\lambda}))$ la plus élevée. Le coefficient choisi à l'itération $\mu$, sera utilisé pour déterminer la liste $\Gamma_\mu+1$ des coefficients $k_i^{\mu+1,\lambda}$ à évaluer pour l'itération $\mu+1$. Autrement dit, pour chaque itération $\mu$, pour $\mu$ variant entre 2 et $\mu_{max}$, la liste $\Gamma_\mu$ des valeurs des coefficients $k_i^{\mu,\lambda}$ à évaluer dépend du coefficient de calcul $k_{i,opt}^{\mu-1}$ choisi à l'issue de l'itération $\mu-1$. En effet, lors de chaque itération, l'optimisation cherche un coefficient de calcul ayant une probabilité de discrimination la plus élevée, d'une manière plus fine autour du coefficient de calcul choisi à l'issue de l'itération précédente.

Lors d'une itération $\mu$, le coefficient $k_i$ a été évalué en prenant à chaque fois une valeur de la liste $\Gamma_\mu$ correspondant aux valeurs d'un domaine $A_\mu = [-a_{\mu,r}/2, a_{\mu,r}/2] \times [- a_{\mu,i}/2, a_{\mu,i}/2]$ parcouru avec un pas $p_\mu$, où $a_{\mu,r}$ et $a_{\mu,i}$ sont deux réels. Les intervalles $[-a_{\mu,r}/2, a_{\mu,r}/2]$ et $[- a_{\mu,i}/2, a_{\mu,i}/2]$ correspond respectivement, aux domaines de variation de la partie réelle et de la partie imaginaire des valeurs $k_i^{\mu,\lambda}$ à évaluer lors de l'itération μ. Le domaine de variation des coefficients $k_i^{\mu+1,\lambda}$ à évaluer lors de l'itération μ+1 est préférentiellement centré autour des parties réelles et imaginaires du coefficient $k_{i,opt}^{\mu}$ choisi à l'issue de l'itération μ. Préférentiellement, le domaine de variation des coefficients à évaluer lors de l'itération μ+1 correspond à :

$$A_{\mu+1}= A_{\mu+1,r} \times A_{\mu+1,i} = [Re(k_{i,opt}^{\mu}) - a_{\mu,r}/(2*b) , Re(k_{i,opt}^{\mu}) + a_{\mu,r}/(2*b)] \times$$

$$[Im(k_{i,opt}^{\mu}) - a_{\mu,i}/(2*b) , Im(k_{i,opt}^{\mu}) + a_{\mu,r}/(2*b)]$$

avec b un nombre réel supérieur à 1.

Les intervalles de variation $A_{\mu+1,r}$ et $A_{\mu+1,i}$ sont ainsi plus réduits par rapport aux intervalles $A_{\mu,r}$ et $A_{\mu,i}$ associés à l'itération μ. Afin de garder le même nombre de valeurs des coefficients de calcul évalués après deux itérations successives μ et μ+1, le pas $p_{\mu+1}$ avec lequel le domaine $A_{\mu+1}$ est parcouru, est préférentiellement égal au pas de l'itération μ divisé par b ($p_{\mu+1} = p_{\mu}/b$).

Lors de l'étape F5 du procédé de modulation, on compare les probabilités de discrimination réussie $\alpha_i^{\mu,\lambda}$ déterminées lors de l'itération μ à un seuil de probabilité $\alpha_{opt}$ préalablement fixée. Si ces probabilités de discrimination réussie $\alpha_i^{\mu,\lambda}$ sont inférieures à ce seuil, et si on n'a pas atteint le nombre d'itérations maximum $\mu_{max}$ (sortie non de F5) on reboucle sur l'étape F2. Si la probabilité de discrimination la plus élevée $\alpha_i^{\mu}$, déterminée lors de l'itération μ, est supérieure ou égale au seuil de probabilité $\alpha_{opt}$, ou si on a atteint le nombre d'itérations maximum $\mu_{max}$ (sortie oui de F5) l'opération de modulation est arrêtée. Préférentiellement, le seuil de probabilité $\alpha_{opt}$ est égal à 1. À l'issue du procédé de modulation, on obtient ainsi un coefficient de calcul modulé $k_{i,opt}$ qui correspond au coefficient de calcul $k_{i,opt}^{\mu}$ ayant la meilleure probabilité de discrimination réussie $\alpha_i^{\mu}$, qui est choisi à l'issue de la dernière itération μ réalisée.

Un plan de protection réalisé selon les modes de réalisation ou de mise en oeuvre décrits ci-dessus est avantageusement, un plan sûr et facile à implémenter. Le plan de protection est également adapté à des réseaux hétérogènes comportant plusieurs conducteurs de section et de nature différentes (ligne aérienne, câble souterrain, ...), et des dispositifs de génération d'énergie dispersées (GED). La portabilité de la méthode de détection et de discrimination sur des réseaux urbains et ruraux avec ou sans production décentralisée (GED) a été vérifiée avec succès. Les réseaux ont été étudiés selon tous les types de régime de neutre des réseaux de distribution moyenne tension (neutre impédant, neutre compensé, neutre isolé et neutre mis directement à la terre). Le pourcentage de discrimination réussie a été évalué pour différents réseaux étudiés, et il est compris entre 91 et 100 % pour une discrimination d'un défaut monophasé établi et un déclenchement après un premier retard temporel. Le pourcentage avoisine les 100 % lorsqu'on tient compte des discriminations et des déclenchements après un deuxième retard temporel supérieur au premier retard temporel.

**Revendications**

1. Réseau de distribution d'énergie électrique comportant :

- un départ (1) moyenne tension ayant une extrémité amont et une extrémité aval, l'extrémité amont étant destinée à être connectée à une source d'alimentation (2) ;
- au moins des première et deuxième protections consécutives (P$_i$, P$_{i+1}$) échelonnées le long dudit départ (1) et agencées de sorte que la première protection (P$_i$) soit disposée entre l'extrémité amont du départ (1) et la deuxième protection (P$_{i+1}$), la première (P$_i$) et la deuxième (P$_{i+1}$) protections définissant les extrémités amont et aval d'un premier ouvrage (O$_i$) associé à la première protection (P$_i$) ;

réseau de distribution dans lequel la première protection ($P_i$) comporte :

- un module de recherche ($M_i$) configuré pour détecter un défaut monophasé établi (D) en aval de la première protection ($P_i$), le module de recherche ($M_i$) étant muni d'un circuit de mesure de courant et de tension de phase ;
- un circuit de coupure ($C_i$) de la distribution en aval de la première protection ($P_i$), de l'énergie électrique ;

réseau de distribution **caractérisé en ce que** la première protection ($P_i$) comporte :

- un système de calcul d'une grandeur complexe ($Z_i$) ayant une partie réelle ($\text{Re}(Z_i)$) et une partie imaginaire ($\text{Im}(Z_i)$) à partir de la tension et du courant de phase mesurés, ladite grandeur complexe ($Z_i$) tenant compte de la position du lieu du défaut monophasé établi (D), par rapport au circuit de mesure, et de la valeur de la résistance du défaut ;
- un circuit de comparaison de la grandeur complexe calculée ($Z_i$) avec des premier et second seuils ($S_{i1}$, $S_{i2}$) complexes correspondant à des première et seconde droites dans un plan complexe associé au repère ($O$, $\text{Re}(Z_i)$, $\text{Im}(Z_i)$), le premier seuil complexe ($S_{i1}$) définissant dans le plan complexe un premier domaine ($S_{i1}$) configuré pour représenter l'occurrence d'un défaut monophasé établi (D) dans une zone de surveillance ($L_i$) comprise dans le premier ouvrage ($O_i$) et ayant la première protection ($P_i$) comme extrémité amont, les premier et deuxième seuils ($S_{i1}$, $S_{i2}$) définissant dans le plan complexe un deuxième domaine ($B_{i2}$) ne se chevauchant pas avec le premier domaine ($B_{i1}$), et configuré pour représenter l'occurrence d'un défaut monophasé établi (D) dans une zone de surveillance additionnelle ($L'_i$) distincte de la zone de surveillance ($L_i$) et disposée à son aval de manière à ce que l'extrémité aval ($Y_i$) de la zone ($L_i$) correspond à l'extrémité amont de la zone additionnelle ($L'_i$) ;

et **en ce que** le circuit de coupure ($C_i$) est configuré pour couper la distribution d'énergie électrique après :

- un premier retard temporel ($T_{i1}$) lorsque la grandeur complexe calculée ($Z_i$) appartient au premier domaine ($B_{i1}$) du plan complexe ;
- un deuxième retard temporel ($T_{i2}$) supérieure au premier retard temporel ($T_{i1}$), lorsque la grandeur complexe calculée ($Z_i$) appartient au second domaine ($B_{i2}$) du plan complexe, et lorsque le défaut monophasé (D) est toujours détecté après le premier retard temporel ($T_{i1}$).

2. Réseau de distribution d'énergie électrique selon la revendication 1, **caractérisé en ce qu'**il comporte une troisième protection ($P_{i+2}$) disposée entre la deuxième protection ($P_{i+1}$) et l'extrémité aval du départ (1), et **en ce que** les deuxième ($P_{i+1}$) et troisième ($P_{i+2}$) protections définissent les extrémités amont et aval d'un deuxième ouvrage ($O_{i+1}$) associé à la deuxième protection ($P_{i+1}$) et **en ce que** la zone de surveillance additionnelle ($L'_i$) est continue et comporte une portion du deuxième ouvrage ($O_{i+1}$).

3. Réseau de distribution d'énergie électrique selon l'une des revendications 1 et 2, **caractérisé en ce que** la grandeur complexe calculée ($Z_i$) est donnée par la relation :

$$Z_i = \frac{V_{i\Phi}}{I_{i\Phi} + k_i \cdot I_{iR}} \quad \text{avec} \quad I_{iR} = I_{iA} + I_{iB} + I_{iC} \qquad (1)$$

- $\Phi$ désigne la phase en défaut A, B ou C du système triphasé ;
- i désigne un indice relatif à la première protection ($P_i$) ;
- $V_{i\Phi}$ et $I_{i\Phi}$ représentent les tension et courant de la phase en défaut, mesurés par le système de mesure de la première protection ($P_i$) en présence du défaut monophasé (D) ;
- $I_{iR}$ représente le courant résiduel qui est égal à la somme des trois courants de phase (A, B, et C) mesurés par le circuit de mesure de la première protection ($P_i$) et ;
- $k_i$ représente un coefficient de calcul associé à la première protection ($P_i$).

4. Procédé de protection d'un réseau de distribution d'énergie électrique selon l'une des revendications 1 à 3, procédé **caractérisé en ce qu'**il comporte les étapes suivantes lors de la détection d'un défaut monophasé établi (D) par la première protection ($P_i$) :

- un calcul de la grandeur complexe ($Z_i$) à partir d'une tension et d'un courant de phase mesurés par le circuit de mesure ;
- une comparaison de la grandeur calculée ($Z_i$) avec les premier et second seuils complexes ($S_{i1}$, $S_{i2}$) correspondant à des droites dans le repère complexe ($O$, $Re(Z_i)$, $Im(Z_i)$) ;
- une vérification de la présence d'un défaut monophasé établi ($D$) soit dans la zone de surveillance ($L_i$) soit dans la zone de surveillance additionnelle ($L'_i$).

5. Procédé de réglage de la première protection ($P_i$) du réseau de distribution de l'énergie selon la revendication 3, procédé **caractérisé en ce qu'**il comporte les étapes suivantes :

- réaliser une pluralité de simulations transitoires électromagnétiques du départ (1) lors d'une apparition d'un défaut monophasé établi ($D$) de manière à calculer la tension et le courant de phase dans la première protection ($P_i$), les simulations étant réalisées en variant au moins le lieu d'apparition ($x$) du défaut monophasé établi ($D$) et sa résistance ($R_{def}$) ;
- calculer la grandeur complexe ($Z_i$) pour chaque simulation ;
- représenter les différentes grandeurs complexes calculées représentatives des simulations dans le repère complexe ($O$, $Re(Z_i)$, $Im(Z_i)$) ;
- moduler le coefficient de calcul $k_i$ de sorte à faire varier les différentes valeurs de la grandeur calculée ($Z_i$) dans le repère complexe ($O$, $Re(Z_i)$, $Im(Z_i)$), et à réussir une définition des première et seconde droites, correspondant aux premier et second seuils ($S_{i1}$, $S_{i2}$), délimitant le maximum de valeurs de la grandeur calculée ($Z_i$) correspondant auxdits premier et second domaines ($B_{i1}$, $B_{i2}$).

6. Procédé de réglage d'une protection d'un réseau de distribution de l'énergie selon la revendication 5, **caractérisé en ce que** la modulation du coefficient de calcul $k_i$ est réalisée de manière à ce que :

- pour chaque itération $\mu$, $\mu$ étant un entier compris entre 1 et $\mu_{max}$ un nombre maximum d'itération préalablement fixé, des calculs d'évaluation exploitant les résultats des simulations transitoires éléctromagnétiques de défauts monophasés établis ($D$) dans le départ (1) sont réalisés pour chaque coefficient de calcul $\left( k_i^{\mu,\lambda} \right)$ appartenant à une liste $\Gamma_\mu$ de $\nu$ coefficients $\left( \Gamma_\mu = \{ k_i^{\mu,\lambda}, \lambda=1, \ldots, \nu \} \right)$, pour chaque coefficient de calcul $\left( k_i^{\mu,\lambda} \right)$ évalué, des premier $\left( S_{i1}^{\mu,\lambda} \right)$ et second $\left( S_{i2}^{\mu,\lambda} \right)$ seuils associés à la première protection ($P_i$) sont déterminés et une probabilité $\left( \alpha_i^{\mu,\lambda} \right)$ de discrimination réussie des zones de surveillance ($L_i$, $L'_i$) comportant le défaut ($D$) simulé, est calculée ;
- après chaque itération $\mu$, un coefficient $k_{i,opt}^\mu$ est choisi parmi la liste $\Gamma_\mu$, le coefficient choisi $k_{i,opt}^\mu$ ayant la probabilité de discrimination la plus élevée $\alpha_i^\mu$ ;
- pour chaque itération $\mu$, $\mu$ variant entre 2 et $\mu_{max}$, la liste $\Gamma_\mu$ des $\nu$ valeurs des coefficients $\left( k_i^{\mu,\lambda} \right)$ à évaluer dépend du coefficient de calcul choisi $k_{i,opt}^{\mu-1}$ obtenu après l'itération $\mu$-1 ;
- l'optimisation est arrêtée lorsque le nombre d'itération atteint $\mu_{max}$ ou lorsque la probabilité de discrimination la plus élevée $\left( \alpha_i^\mu \right)$, déterminée lors de l'itération $\mu$, est supérieure ou égale à un seuil de probabilité $\alpha_{opt}$ préalablement fixé ;
- le coefficient de calcul modulé $k_{i,opt}$ correspond au coefficient $k_{i,opt}^\mu$ obtenu lors de la dernière itération réalisée.

Figure 1

Figure 2

Figure 3

**Figure 4**

**Figure 5**

**Figure 6**

**Figure 7**

Figure 8

- Calculer les valeurs de $V_{i\Phi}$ et $I_{i\Phi}$, pour la protection $P_i$, par simulation électromagnétique pour chaque défaut $D(x, R_{def})$ simulé ;
- Déterminer une liste $\Gamma_{ini}$ initiale de valeurs du coefficient $k_i$ à évaluer

**F1**

$\langle \mu = 1 \rangle$

Déterminer une liste $\Gamma_\mu$ de $\nu$ valeurs du coefficient $k_i$ à évaluer : $\Gamma_\mu = \{ k_i^{\mu,\lambda} ; \lambda = 1,..., \nu\}$, où $\nu$ est un entier supérieur à 1

$\begin{cases} \mu = 1 \Rightarrow \Gamma_\mu = \Gamma_{ini} \\ \mu >= 1 \Rightarrow \Gamma_\mu \text{ dépend du coefficient } k_{i,opt}^{\mu-1} \text{ obtenu après l'itération } \mu\text{-1} \end{cases}$

**F2**

Déterminer pour chaque $k_i^{\mu,\lambda}$ évalué, les seuils $S_{i1}^{\mu,\lambda}$ et $S_{i2}^{\mu,\lambda}$ ainsi que la probabilité de discrimination réussie $\alpha_i^{\mu,\lambda}$ associée.

**F3**

$\mu = \mu+1$

Déterminer $k_{i,opt}^\mu$ et les seuils $S_{i1,opt}^\mu$ et $S_{i2,opt}^\mu$ associés. $k_{i,opt}^\mu$ étant le coefficient la liste $\Gamma_\mu$ ayant la meilleure probabilité de discrimination réussie $\alpha_i^\mu$.

**F4**

non

$\alpha_i^\mu \geq \alpha_{opt}$

ou

$\mu = \mu_{max}$

**F5**

oui

**F6**

$k_{i,opt} = k_{i,opt}^\mu$

$S_{i1,opt} = S_{i1,opt}^\mu$

$S_{i2,opt} = S_{i2,opt}^\mu$

# Figure 9

**Europäisches Patentamt**
**European Patent Office**
**Office européen des brevets**

# RAPPORT DE RECHERCHE EUROPEENNE

Numéro de la demande

EP 13 35 4037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 290 456 A1 (ELECTRICITE DE FRANCE [FR]) 12 mars 2003 (2003-03-12) | 1,2,4-6 | INV. H02H3/40 |
| A | * abrégé * <br> * le document en entier * <br> ----- | 3 | |
| A | EP 0 537 066 A1 (ELECTRICITE DE FRANCE [FR]) 14 avril 1993 (1993-04-14) <br> * abrégé * <br> * figures 1-3 * <br> * le document en entier * <br> ----- | 1-6 | |
| A | EP 0 307 826 A1 (ASEA BROWN BOVERI [SE]) 22 mars 1989 (1989-03-22) <br> * abrégé * <br> * figure 1 * <br> * le document en entier * <br> ----- | 1-6 | |

**DOMAINES TECHNIQUES RECHERCHES (IPC)**

H02H

Le présent rapport a été établi pour toutes les revendications

| Lieu de la recherche | Date d'achèvement de la recherche | Examinateur |
|---|---|---|
| Munich | 4 mars 2014 | Operti, Antonio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 35 4037

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-03-2014

| Document brevet cité au rapport de recherche | | Date de publication | Membre(s) de la famille de brevet(s) | | Date de publication |
|---|---|---|---|---|---|
| EP 1290456 | A1 | 12-03-2003 | AT | 330231 T | 15-07-2006 |
| | | | AU | 7415001 A | 24-12-2001 |
| | | | DE | 60120698 T2 | 29-03-2007 |
| | | | EP | 1290456 A1 | 12-03-2003 |
| | | | ES | 2263624 T3 | 16-12-2006 |
| | | | FR | 2810117 A1 | 14-12-2001 |
| | | | WO | 0196889 A1 | 20-12-2001 |
| EP 0537066 | A1 | 14-04-1993 | AT | 151886 T | 15-05-1997 |
| | | | DE | 69219055 D1 | 22-05-1997 |
| | | | DE | 69219055 T2 | 16-10-1997 |
| | | | DK | 0537066 T3 | 20-10-1997 |
| | | | EP | 0537066 A1 | 14-04-1993 |
| | | | ES | 2103352 T3 | 16-09-1997 |
| | | | FI | 924515 A | 08-04-1993 |
| | | | FR | 2682190 A1 | 09-04-1993 |
| | | | NO | 923886 A | 13-04-1993 |
| EP 0307826 | A1 | 22-03-1989 | CA | 1311044 C | 01-12-1992 |
| | | | DE | 3868806 D1 | 09-04-1992 |
| | | | EP | 0307826 A1 | 22-03-1989 |
| | | | SE | 459059 B | 29-05-1989 |
| | | | US | 4878142 A | 31-10-1989 |

EPO FORM P0460

Pour tout renseignement concernant cette annexe : voir Journal Officiel de l'Office européen des brevets, No.12/82